# EUROPEAN PATENT SPECIFICATION

(11) **EP 0 731 817 B1**
(45) Date of publication and mention of the grant of the patent: **29.07.1998**
(21) Application number: 95901638.7
(22) Date of filing: 28.11.1994
(51) Int. Cl.: C08G 12/32

(54) **METHOD FOR MANUFACTURING MELAMINE RESINS AND PLASTICS, THE MELAMINE RESINS AND PLASTICS SO MANUFACTURED**
VERFAHREN ZUR HERSTELLUNG VON MELAMINHARZEN UND KUNSTSTOFFEN SOWIE DIE DANACH HERGESTELLTEN MELAMINHARZE UND KUNSTSTOFFE
PROCEDE DE FABRICATION DE RESINES ET MATIERES PLASTIQUES DE MELAMINE, ET RESINES ET MATIERES PLASTIQUES DE MELAMINE AINSI OBTENUES

(30) Priority: 29.11.1993 PL 30125993; 29.11.1993 PL 30126093; 07.11.1994 PL 30576694; 07.11.1994 PL 30576794
(43) Date of publication of application: 18.09.1996
(73) Proprietor: PROZAP ENGINEERING LTD., 24-110 Pulawy (PL); Politechnika Radomska im. Kazimierza Pulaskiego, 26-600 Radom (PL)
(72) Inventor: WIRPSZA, Zygmunt, PL-01-710 Warszawa (PL); MATUSZEWSKA, Anna, PL-26-600 Radom (PL); MATUSZEWSKI, Jaroslaw, PL-26-600 Radom (PL)
(74) Representative: von Füner, Alexander, Dr.
(86) International application number: PL9400022
(87) International publication number: WO9514722

(56) References cited:
- FR-A- 2 337 754
- GB-A- 1 036 906
- GB-A- 1 040 051
- GB-A- 1 065 730
- US-A- 4 235 763

## Description

The subject matter of this invention is a method for the preparation of melamine resins and plastics, and the melamine resins and plastics prepared according to this method. Many curable melamine derivatives are known in the art. However, most of them are produced in the form of an aqueous solution, for example impregnative formaldehyde-melamine resins, or dissolved in organic solvents, etherified coating-type resins. The manufacturing process of other curable melamine derivatives, although they can be present in solventless form, such as for example hexamethoxymethylmelamine, is complex, economically unfeasible and critical for the environment.

For the preparation of hexamethoxymethylmelamine the prior art proposes to use a three-fold excess of formaldehyde (in the form of formalin) with respect to melamine, or 18 mole of formaldehyde per one mole of melamine (see Wirpsza, Brzezinski "Aminoplasty", WNT, Warszawa 1970 p. 95). Two thirds of the unreacted formaldehyde are thus discharged into the sewage.

On the other hand, for preparing hexamethoxymethylmelamine from hexahydroxymethylmelamine, almost a two-fold excess of methanol over the stoichiometric ratio has to be used, whereby about 60% of unused methanol is discharged into the sewage (ibid., Aminoplasty, p. 342).

GB-A-1 036 906 discloses a process for the preparation of an aqueous melamine resin solution, which comprises reacting melamine with a mixture of formaldehyde and a cycloaliphatic ketone in an alkaline medium at a temperature below 100°C and in the form of a solution having not more than 30% of water.

US-A-4 235 763 discloses a method for preparing a polymeric melamine composition obtained by reacting a nitroalkanol with melamine in a mole ratio of about 3-4:1 at an elevated temperature and under alkaline conditions. According to that patent, melamine is digested in aqueous solutions (about 50%) at temperatures below 100°C.

Accordingly, it was extremely desirable to find a simple and cost-effective method for the preparation of liquid, anhydrous and solventless, reactive derivatives of melamine and of melamine resins, readily processable into melamine plastics.

Unexpectedly, it was found that products of the reaction of formaldehyde with ketones and aldehydes containing active aliphatic C-H bonds in the alpha-position to the carbonyl group(s) are reactive and excellent melamine solvents.

The present method for the preparation of melamine resins and plastics is characterized in that an amount of 10 to 200 parts by weight of melamine is dissolved at a reaction temperature of from 100°C to 180°C in 100 parts by weight of a reactive solvent containing not more than 30 wt.-% of water, being a compound or a mixture of compounds of a molecular weight not exceeding 500, containing hydroxymethyl groups, their etherified derivatives, hemiformals or formals, and the resultant reaction mixture is maintained at the reaction temperature until the desired homogeneity, viscosity, softening point or degree of cross-linking is achieved. Said reactive solvent includes the products of the reaction of ketones or aldehydes that contain aliphatic C-H bonds located at the alpha-position to the carbonyl groups and their formaldehyde derivatives with formaldehyde. Auxiliary agents may first be-added to the resin prior to their cross-linking, and then the mixture may be brought to a desired degree of cross-linking.

Said auxiliary agents may be catalysts or initiators, antitacking additives, fillers, foamers, surfactants and other agents.

The melamine resins prepared according to the invention may contain different groups linked to an aliphatic carbon atom, such as reactive hydroxymethyl groups, their ether derivatives, hemiformals and/or formals, all activated by the carbonyl group(s) located at the alpha-position, and one or more hydrogen atoms of the melamine amino groups substituted by a sequence of at least two aliphatic carbon atoms.

The melamine plastics prepared according to the invention have at least two hydrogen atoms of the melamine amino groups substituted with sequences of at least two aliphatic carbon atoms, bonded to the carbonyl group. The melamine resins prepared according to the invention may be modified with the reactive compounds containing reactive groups, capable of reacting with the melamine resins. By the modification of the melamine resin with a compound containing at least one such group and an olefinic unsaturated group, preferably acrylamide, modified melamine resins are prepared that are curable by polymerization, preferably by the radical-type polymerization process. Melamine resins and plastics of improved flexibility may be prepared by the modification of the melamine resin according to the invention with at least one compound containing at least one, preferably two, reactive groups and an aliphatic chain, preferably a polyether chain. Foamed plastics may be prepared by foaming, followed by the solidification of said reaction mixture of melamine with a reactive solvent.

The solubility of the melamine in reactive solvents is low at room temperature and considerably rises only above 100°C, whereby the general rule is applicable that the higher the temperature, the higher the solubility, and the higher the temperature, the faster the reactions and polyreactions that proceed in the reaction mixture. At elevated temperatures, polyreactions and an increase of molecular weight also proceed in the reactive solvent itself, while the process is accompanied by a decrease of the melamine solubility.

Usually, it is preferred to rapidly heat the mixture up to the highest possible temperature in order to obtain a melamine or a melamine-derivative solution of the highest possible concentration, which may then be cooled, if desired. A limiting factor for the maximal acceptable temperature of dissolution of the melamine is the rate of the polyreaction and cross-linking at elevated temperatures, possibly accompanied by the decomposition of the polymer formed. The polyreaction may be slowed down or terminated at any chosen stage by cooling the reaction mixture. The reactive solvents may contain volatile components, e.g. water or other more or less volatile compounds in certain amounts. Volatile compounds may also be formed during the polyreaction process and from the decomposition of polyhydroxy compounds in the presence of melamine at elevated temperatures.

All of the volatile components may be distilled off during the melamine dissolution operation, if it is carried out at a temperature above their boiling points. Thus, even if such components are originally present or are formed during the melamine dissolution, the resultant solution at the elevated temperature of above 100-140°C is free from water, free from volatile compounds, and practically consists only of polymer-forming substances. Initially, these polymer-forming substances are liquid at the reaction temperature, but their viscosity is gradually rising with time until the bulk of the mixture solidifies in a temperature-dependent process, i.e. the higher the temperature is, the faster the viscosity increases, with eventual solidification of the resin.

To speed up the polyreaction or the curing process, accelerating agents (catalysts, particularly of the acidic or alkaline-type) or initiating agents (particularly of the radical type) may be added into the melamine solution or into the reaction mixture that contains melamine and/or its derivatives.

The modifying additives optionally introduced into the melamine solution or melamine-containing reaction mixture contain reactive groups, preferably carbamate, amide or hydroxyl groups, that are able to promote the reaction of the substances with the reaction mixture.

The modifying additives, containing functional groups which are reactive with respect to the reaction mixture and containing unsaturated bonds, for example acrylamide, are used in a ratio of within 3 to 30 parts by weight per 100 parts by weight of the reaction mixture.

Said modified resins are hardened by polymerization in the presence of radical initiators, preferably peroxides. The liquid solution of the melamine or melamine derivatives containing reaction mixture can be used to prepare an end product of any shape by pouring or otherwise transferring it into a mould, followed by causing its solidification, preferably by curing.

The major advantages of the method according to the present invention are:
- ease and speed with which solutions of melamine, its reactive derivatives, resins and plastics can be prepared in a practically non-aqueous and solventless way;
- preparation of liquid intermediates with a content of 100 wt.-% or close to that value of the polymer-forming substance which is of advantage from technological, economic and environmental standpoints;
- optional easy-modification of the properties of the end products prepared according to the invention by the use of other reactive additives or substances;
- reactive melamine solvents according to the invention are liquid and stable at room temperature as well as relatively inexpensive since the starting material for the preparation is generally cost-effective, and their preparation process is rather simple.

### Example I

100 g anhydrous, liquid trihydroxymethylacetone of pH 7.8 is rapidly preheated up to 100°C, then 46.5 g powdered melamine is added under vigorous stirring. The melamine dissolves to form a clear yellow-orange, viscous solution of pH 8.2. The solution is stable for over 24 hours at room temperature and cures at elevated temperatures, i.e. within 100 min. at 65°C, within 10 min. at 120°C and within 3.5 min. at 150°C, to form an insoluble, non-melting, solid product. For comparison, in glycerol 7.7 g melamine is dissolved at 100°C, but neither the dissolved material nor the solution harden.

### Example II

Three 100 g trihydroxymethylacetone portions of different pH values are rapidly heated up to 100, 125 and 150°C, respectively, and 46.5 g powdered melamine is added to each solution under vigorous stirring. The melamine dissolves to form a clear, viscous solution.

The gelation time for the particular solutions differing in pH at various temperatures are given in the table below:

| pH Value | Gelation time(min-s)at various temperat. | | |
|---|---|---|---|
| | 100°C | 120°C | 150°C |
| 5.6 | | 0-43 | 0-30 |
| 6.0 | | 0-55 | |
| 7.0 | 12-25 | 6-10 | 0-38 |
| 8.2 | 16-28 | 10-38 | 3-41 |
| 9.0 | 30-52 | 8-14 | 2-43 |
| 10.0 | 15-44 | 4-37 | 4-08 |
| 11.5 | 8-24 | 1-45 | 0-37 |

### Example III

A 100 g anhydrous mixture (i.e. a mixture dehydrated by vacuum distillation) of di- and trihydroxymethylacetones of pH 6.5 is heated up to 100°C for 10 minutes, and then 26.7 g of powdered melamine is added under vigorous stirring.

The melamine dissolves to form a clear, viscous solution. The solution is stable for over 24 hours at room temperature and cures in 3 minutes at 100°C at pH 7.8.

### Example IV

46 g powdered melamine is added to a 100 g liquid, anhydrous mixture of di- and trihydroxymethylacetones of pH 8.5 and heated up to 100°C for 10 minutes under vigorous stirring. Upon dissolution of the melamine to form a clear liquid, the solution is allowed to cool down to 30°C and diluted by the addition of 100 g ethyl ether under vigorous stirring. The mixture separates into two liquid layers. The bottom layer is drained, and the residual ethyl ether is removed from the top layer by distillation to obtain 130 g of the reactive melamine derivative. Upon distilling-off the residual ethyl ether, the top layer yielded 16 g of an aqueous solution of unreacted hydroxymethylacetones. The recovered hydroxymethylacetones can be re-used in the preparation of the starting melamine solutions.

### Example V

30 g melamine is dissolved in 100 g of tetrahydroxymethylacetone and heated up to 150°C under vigorous stirring. Immediately upon dissolution of the melamine, the solution is poured into a mould at 150°C, wherein the mixture cures and solidifies within a few minutes to form a solid product.

### Example VI

100 g trihydroxymethylacetone is mixed with 80 g melamine in an open vessel under vigorous stirring and rapidly heated up to a temperature from 20°C to 140°C within 12 minutes to form a homogeneous, clear, liquid mass which, upon immediate cooling down to room temperature, solidifies to form a hard, brittle, thermoset product. During heating, a total of 18 g volatile components evaporate from the solution. The reaction product cures in 1 to 2 minutes at 150°C. The product contains about 50% melamine.

### Example VII

100 g trihydroxymethylacetone is mixed with 35 g powdered melamine and heated up to 120°C under stirring. Then, upon cooling down to 100°C, 30 g acrylamide is added and dissolved by stirring, followed by cooling down to 85°C and the addition of 0.3 g benzoyl peroxide under stirring.
The resultant product has aerobic properties, remains liquid at 100°C as long as it is vigorously stirred in the presence of air and, as the stirring is stopped, immediately solidifies with cross-linking.

### Example VIII

100 g of a mixture of di- and trihydroxymethylacetone is mixed with 30 g acrylamide, and the resultant mixture is heated under stirring until complete dissolution at 60°C. The solution is heated up to 100°C in the presence of air and under continuous stirring, then 35 g melamine is added and heated up to 130°C until the melamine dissolves.
The resultant clear solution is cooled down to 85°C, and 0.2 g benzoyl peroxide is added and dissolved under stirring. Upon continued heating up to 120°C, the mixture cures immediately to form a hard, infusible, insoluble product.

### Example IX

30 g powdered melamine is added to 100 g trihydroxymethylacetaldehyde, and the mixture is heated up to 145°C within 3 minutes under vigorous stirring to form a clear solution which cures within 3 minutes at that temperature.

### Example X

35 g melamine is added to 100 g trihydroxymethylacetaldehyde monohemiformal of pH 9 (determined colorimetrically) and heated up to 160°C under vigorous stirring. At 145°C the mixture becomes clear and at 160°C it cures.

### Example XI

110 g melamine is added to 100 g of a 90% aqueous solution of tetrahydroxymethylcyclohexanone and, under vigorous stirring, the mixture is rapidly heated up to 140°C to form a clear solution; a total of 20 g volatile components was removed from the reaction mixture by evaporation during heating to result in a resin with a melamine content of 60 wt.-%. When further heated up to 150°C, the resin cures within 1 minute.

### Example XII

70 g powdered melamine is added to 100 g tetrahydroxymethylcyclohexanone and, under vigorous stirring, the mixture is rapidly heated up to 120°C to form a clear solution. Upon further heating, the solution gelates at 150°C within 2 minutes. Upon alkalinization with 0.15 g of a NaOH solution, the mixture gelates within 1 minute and, upon acidification with 0.1 g paratoluenesulphonic acid - within 12 seconds.

### Example XIII

25 g powdered melamine is added to 100 g trihydroxymethylnitromethane. Under vigorous stirring, the mixture is heated up to 120°C, at which temperature the melamine dissolved. Upon further heating up to 125°C, the mixture undergoes foaming and curing to form a tan, rigid, solid, foamed product of a density of 100 kg/m³.

### Example XIV

30 g powdered melamine is added to 100 g of a 80% aqueous solution of trihydroxymethylnitromethane. Under vigorous stirring, the mixture is heated up to 125°C. The melamine is dissolved to form a clear, homogeneous solution. A total of 35 g volatile components was distilled off (vaporized) during the heating. 95 g resinuous, foamy product is obtained which cured within 2 minutes to form a tan, rigid, solid, foamed product of a density of 80 kg/cm³.

To illustrate the melamine resin prepared according to the invention, a likely route of one of the many possible reactions resulting in the formation of said resin, based on the use of melamine and trihydroxymethylacetone as substrate, is schematically presented below.

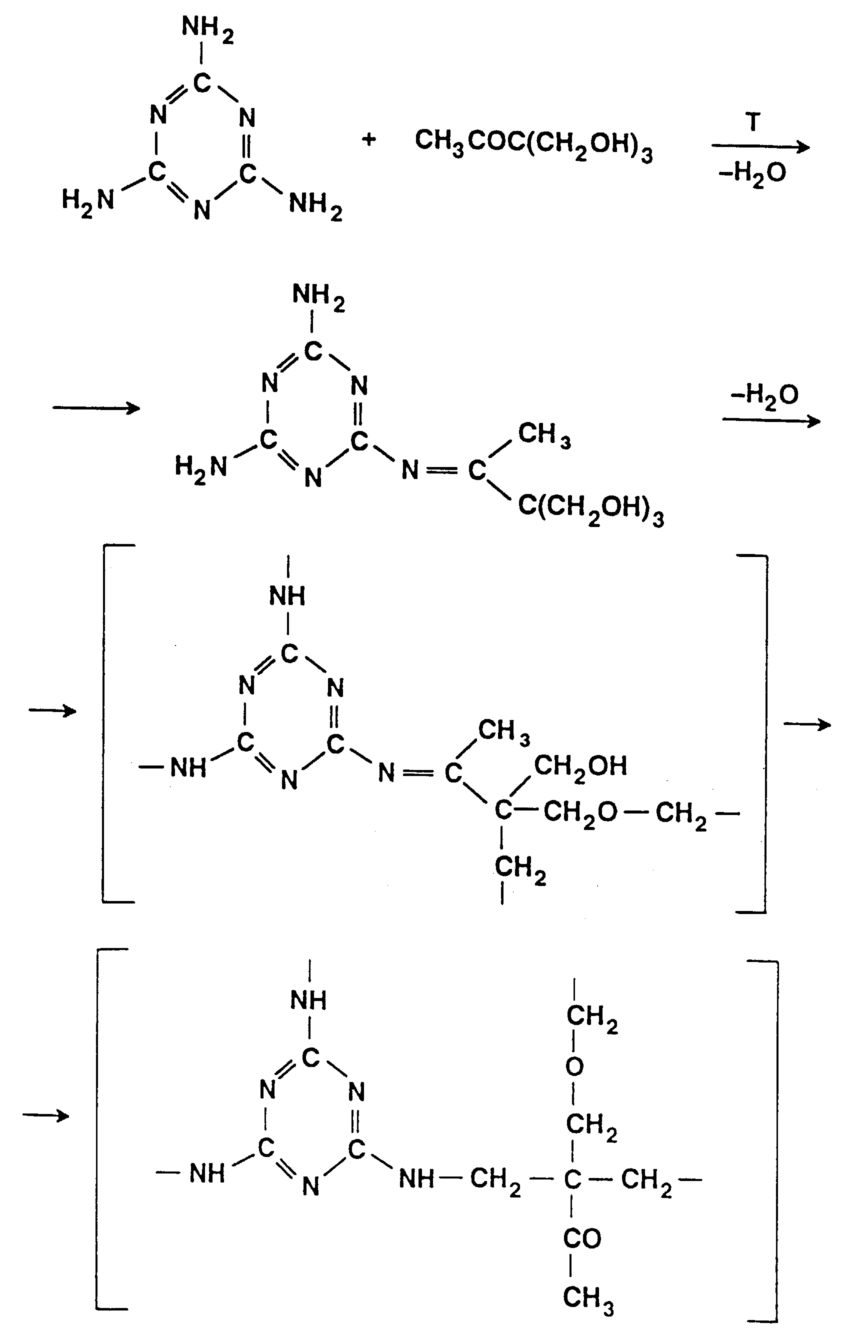

## Claims

1. A method for the preparation of melamine resins and plastics, characterized in that an amount of 10 to 200 parts by weight of melamine is dissolved at a temperature of from 100°C to 180°C in 100 parts by weight of a reactive solvent containing not more than 30 wt.-% of water, being a chemical compound or a mixture of chemical compounds of a molecular weight not exceeding 500, containing hydroxymethyl groups, their ether derivatives, hemiformals and/or formals, and the resultant reaction mixture is maintained at that temperature until the desired homogeneity, viscosity, softening point or degree of cross-linking is achieved.

2. The method according to claim 1, characterized in that the reactive solvent comprises products of the reaction of ketones or aldehydes that contain aliphatic C-H bonds located at the alpha-position to the ketone or aldehyde group(s) and their formaldehyde derivatives with formaldehyde.

3. The method according to claims 1 or 2, characterized in that at least one compound containing at least two types of groups, one of which being capable of reacting with the melamine or with other compounds contained in the reaction mixture, whilst the other group is an olefinic unsaturated group, or at least one compound containing at least one hydroxyl, amide or carbamate group and an aliphatic chain, is added to the reaction mixture.

4. The method according to claims 1 or 2, characterized in that acrylamide is added to the reaction mixture.

5. The method according to claim 1, characterized in that into the reaction mixture an acidic or alkaline agent is added as a polyreaction catalyst, or an initiating agent is added.

6. The method according to claims 1 or 5, characterized in that the initiating agent is a peroxide.

7. The method according to claim 1, characterized in that the auxiliary agents are added into the reaction mixture, whereupon the mixture is brought to the desired degree of cross-linking and/or is allowed to cool down.

8. Melamine resins and plastics, characterized in that they contain reactive hydroxymethyl groups, ether derivatives thereof, hemiformals and/or formals bonded to an aliphatic carbon atom of an active ketone or aldehyde group located at the alpha-position, and contain at least one hydrogen atom of the amino groups of the melamine molecule substituted by a sequence of at least two aliphatic carbon atoms.

9. Melamine plastics, characterized in that they contain at least two hydrogen atoms of the amino groups at the melamine molecule substituted by a sequence of at least two aliphatic carbon atoms.

10. The melamine resins and plastics according to claims 8 or 9, characterized in that they include at least one compound containing an olefinic unsaturated group and at least one functional group capable of reacting with the melamine resins.

11. The melamine resins and plastics according to claim 10, characterized in that said compound contains an amide group.

## Patentansprüche

1. Verfahren zur Herstellung von Melaminharzen und -kunststoffen, dadurch **gekennzeichnet**, daß eine Menge von 10 bis 200 Gewichtsteilen Melamin bei einer Temperatur von 100 bis 180°C in 100 Gewichtsteilen eines reaktionsfähigen Lösungsmittels gelöst wird, das höchstens 30 Gew.-% Wasser enthält und eine chemische Verbindung oder ein Gemisch chemischer Verbindungen mit einem Molekulargewicht von höchstens 500, die Hydroxymethylgruppen enthält bzw. enthalten, ihre Etherderivate, Halbformale und/oder Formale darstellt, und das erhaltene Reaktionsgemisch bei dieser Temperatur gehalten wird, bis die erwünschte Homogenität und Viskosität sowie der erwünschte Erweichungspunkt bzw. Vernetzungsgrad erreicht sind.

2. Verfahren nach Anspruch 1, dadurch **gekennzeichnet**, daß das reaktionsfähige Lösungsmittel Produkte der Reaktion von Ketonen oder Aldehyden, die in α-Stellung zur bzw. zu den Keton- oder Aldehydgruppe(n) sich befindende aliphatische C-H-Bindungen aufweisen, mit Formaldehyd und ihre Formaldehydderivate umfaßt.

3. Verfahren nach Anspruch 1 oder 2, dadurch **gekennzeichnet**, daß wenigstens eine Verbindung, die zumindest zwei Arten von Gruppen aufweist, von denen eine zur Umsetzung mit dem Melamin oder mit anderen im Reaktionsgemisch enthaltenen Verbindungen befähigt ist, während die andere Gruppe eine olefinische ungesättigte Gruppe ist, oder wenigstens eine Verbindung, die zumindest eine Hydroxyl-, Amid- oder Carbamatgruppe und eine aliphatische Kette enthält, dem Reaktionsgemisch zugesetzt wird.

4. Verfahren nach Anspruch 1 oder 2, dadurch **gekennzeichnet**, daß dem Reaktionsgemisch Acrylamid zugesetzt wird.

5. Verfahren nach Anspruch 1, dadurch **gekennzeichnet**, daß dem Reaktionsgemisch ein saures oder alkalisches Mittel als Polyreaktionskatalysator bzw. als Initiator zugesetzt werden.

6. Verfahren nach Anspruch 1 oder 5, dadurch **gekennzeichnet**, daß der Initiator ein Peroxid ist.

7. Verfahren nach Anspruch 1, dadurch **gekennzeichnet**, daß dem Reaktionsgemisch Hilfsmittel zugesetzt werden, wonach das Gemisch auf den erwünschten Vernetzungsgrad gebracht und/oder abgekühlt wird.

8. Melaminharze und -kunststoffe, dadurch **gekennzeichnet**, daß sie reaktionsfähige Hydroxymethylgruppen, ihre Etherderivate, Halbformale und/oder Formale enthalten, die an ein in α-Stellung sich befindendes, aliphatisches C-Atom einer aktiven Keton- oder Aldehydgruppe gebunden sind, und wenigstens ein Wasserstoffatom der Aminogruppen des Melaminmoleküls durch eine Abfolge von wenigstens zwei aliphatischen C-Atomen substituiert ist.

9. Melaminkunststoffe, dadurch **gekennzeichnet**, daß wenigstens zwei H-Atome der Aminogruppen am Melaminmolekül durch eine Abfolge von wenigstens zwei aliphatischen C-Atomen substituiert sind.

10. Melaminharze und -kunststoffe nach Anspruch 8, dadurch **gekennzeichnet**, daß sie wenigstens eine Verbindung umfassen, die eine ungesättigte olefinische Gruppe und wenigstens eine funktionelle Gruppe enthält, die zur Reaktion mit den Melaminharzen befähigt ist.

11. Melaminharze und -kunststoffe nach Anspruch 10, dadurch **gekennzeichnet**, daß die Verbindung eine Amidgruppe enthält.

## Revendications

1. Procédé de préparation de résines et de matières plastiques à base de mélanine, ***caractérisé en ce qu'***une quantité de 10 à 100 parties en poids de mélanine est dissoute à une température allant de 100°C à 180°C dans 100 parties en poids d'un solvant réactif ne contenant pas plus de 30 % en poids d'eau, et étant un composé chimique ou un mélange de composés chimiques de masse moléculaire ne dépassant pas 500, contenant des groupes hydroxyméthyle, leurs dérivés d'éther, des hémiformals et/ou des formals, et le mélange réactionnel obtenu est maintenu à cette température jusqu'à obtenir l'homogénéité, la viscosité, le point de ramollissement ou le degré de réticulation désirés.

2. Procédé selon la Revendication 1, ***caractérisé en ce que*** le solvant réactif comprend des produits de la réaction de cétones ou d'aldéhydes qui contiennent des liaisons C-H aliphatiques situées à la position alpha du ou des groupe(s) cétone ou aldéhyde et de leurs dérivés formaldéhyde avec du formaldéhyde.

3. Procédé selon les Revendications 1 ou 2, ***caractérisé en ce qu'***au moins un composé contenant au moins deux types de groupes, dont l'un est capable de réagir avec la mélanine ou avec d'autres composés contenus dans le mélange réactionnel, tandis que l'autre groupe est un groupe oléfinique insaturé, ou au moins un composé contenant au moins un groupe hydroxyle, amide ou carbamate et une chaîne aliphatique, est ajouté au mélange réactionnel.

4. Procédé selon les Revendications 1 ou 2, ***caractérisé en ce que*** de l'acrylamide est ajouté au mélange réactionnel.

5. Procédé selon la Revendication 1, ***caractérisé en ce qu'***on ajoute au mélange réactionnel un agent acide ou alcalin servant de catalyseur polyréactionnel, ou un agent initiateur.

6. Procédé selon les Revendications 1 ou 5, ***caractérisé en ce que*** l'agent initiateur est un peroxyde.

7. Procédé selon la Revendication 1, ***caractérisé en ce que*** les agents auxiliaires sont ajoutés au mélange réactionnel, après quoi le mélange est porté au degré de réticulation souhaité et/ou est laissé refroidir.

8. Résines et matières plastiques à base de mélanine, ***caractérisés en ce qu'***ils contiennent des groupes hydroxyméthyle réactifs, des dérivés d'éther de ceux-ci, des hémiformals et/ou des formals liés à un atome de carbone aliphatique d'un groupe cétone ou aldéhyde actif situé à la position alpha, et contiennent au moins un atome d'hydrogène des groupes amino de la molécule de mélanine substitué par une séquence d'au moins deux atomes de carbone aliphatiques.

9. Matières plastiques à base de mélanine, ***caractérisés en ce qu'***elles contiennent au moins deux atomes d'hydrogène des groupes amino sur la molécule de mélanine substitués par une séquence d'au moins deux atomes de carbone aliphatiques.

10. Résines et matières plastiques à base de mélanine selon les Revendications 8 ou 9, ***caractérisés en ce qu'***ils contiennent au moins un composé contenant un groupe oléfinique insaturé et au moins un groupe fonctionnel capable de réagir avec les résines à base de mélanine.

11. Résines et matières plastiques à base de mélanine selon la Revendication 11, ***caractérisés en ce que*** ledit composé contient un groupe amide.
